# EUROPÄISCHE PATENTSCHRIFT

(11) **EP 4 242 369 B1**
(45) Veröffentlichungstag und Bekanntmachung des Hinweises auf die Patenterteilung: **07.08.2024**
(21) Anmeldenummer: 22160706.2
(22) Anmeldetag: 08.03.2022
(51) Int. Cl.: D06F 57/04, F16G 11/00, F16G 11/02

(54) **WÄSCHETROCKNER MIT VORRICHTUNG ZUM VERHAKEN DER WÄSCHELEINE**
CLOTHES DRIER WITH A DEVICE FOR HOOKING THE CLOTHESLINE
SÈCHE-LINGE POURVU DE DISPOSITIF PERMETTANT D'ACCROCHER LA CORDE À LINGE

(43) Veröffentlichungstag der Anmeldung: 13.09.2023
(73) Patentinhaber: Carl Freudenberg KG, 69469 Weinheim (DE)
(72) Erfinder: Hem, Sudhana, 36020 Solagna (Vi) (IT); Durello, Riccardo, 30033 Noale (IT)

(56) Entgegenhaltungen:
- WO-A1-2005/001190
- CN-U- 208 203 913
- US-A- 6 012 204
- US-A1- 2008 060 170

## Beschreibung

Die Erfindung betrifft einen Wäschetrockner mit einem Spreizgestell mit einer Mehrzahl von aufspreizbaren Armen zur Aufnahme einer Wäscheleine und mit einer Wäscheleine, deren Ende an einem Arm verhakt ist, wobei der Arm eine Öffnung besitzt, durch welche die Wäscheleine geführt ist, und wobei die Wäscheleine im Bereich ihres Endabschnittes mit einer Vorrichtung zum Verhaken versehen ist.

### Stand der Technik

Aus dem Stand der Technik sind unterschiedlichste Formen von Wäschetrockengestellen bekannt. Eine Unterkategorie sind z.B. auf- und zu faltbare Wäschespinnen, welche gelegentlich auch als Wäscheschirme bezeichnet werden. Ein Wäscheschirm mit einer Mehrzahl von auffaltbaren Armen ist in der DE 10 2004 030 720 B4 dargestellt und beschrieben. Die Arme dienen dazu eine Wäscheleine aufzuspannen, an welcher Kleidung und Textilien zum Trocken aufgehängt werden können.

Dabei ist denkbar, dass auf jeder Ebene der Wäschespinne jeweils eine Wäscheleine aufgespannt wird. Alternativ ist denkbar, dass in jedem Segment zwischen zwei Armen je eine Wäscheleine aufgespannt wird. Weiterhin ist möglich nur eine einzige Wäscheleine zu verwenden, welche über alle Ebenen in allen Segmenten verläuft. In allen Fällen ist es erforderlich, dass die Wäscheleine bzw. Wäscheleinen an zumindest einem Ende an den Armen befestigt werden.

Dazu ist es bekannt, die Arme mit Löchern zu versehen und an den Enden der Wäscheleinen eine Widerhakenform anzubringen. Eine solche Widerhakenform in Gestalt einer Klammer wird in der EP 1 639 181 B1 bzw. in der WO 2005/001190 A1 beschrieben.

Nachteilig an dieser Lösung ist, dass ein sicheres Halten des Endes der Wäscheleine in dem Arm nur dann sichergestellt ist, wenn die Wäscheleine wenig biegsam, also relativ starr ist, sodass das freie Ende der Wäscheleine einen Widerhaken bilden und bei Zugbeanspruchung nicht leicht verformt und durch das Loch in dem Arm gezogen werden kann.

Die CN 208203913 U zeigt ein Trockengestell für Kleider, welches an Seilen aufgehängt werden kann. Aus der US 6,012,204 A sind unterschiedlichste Lösungen unter Verwendungen von Klemmelementen bekannt, um die Enden von Seilen zu fixieren ohne diese verknoten zu müssen.

### Aufgabenstellung

Aufgabe der vorliegenden Erfindung ist es einen Wäschetrockner zu schaffen, dessen Wäscheleine einfach montiert und sicher an einem Arm befestigt werden kann. Weitere Aufgabe ist es einen Wäschetrockner zu schaffen, dessen Wäscheleine als flexibles Seil ausgestaltet werden kann.

### Technische Lösung

Gelöst wird diese Aufgabe durch einen Wäschetrockner wie er nachfolgend beschrieben und beansprucht ist.

Erfindungsgemäß wurde als vorteilhaft erkannt zwei Klammern am Endabschnitt einer Wäscheleine anzubringen.

Der erfindungsgemäße Wäschetrockner besitzt ein Spreizgestell mit einer Mehrzahl von aufspreizbaren Armen zur Aufnahme einer Wäscheleine, mindestens eine Wäscheleine, deren Ende an einem Arm verhakt ist, wobei der Arm mindestens eine Öffnung besitzt, z.B. ein Loch oder eine Bohrung, durch welche die Wäscheleine geführt ist. Die Wäscheleine ist im Bereich ihres Endabschnittes, d.h. kurz vor ihrem Ende, mit einer Vorrichtung zum Verhaken versehen, derart, dass das Ende der Wäscheleine nach Montage in dem Arm verhakt bleibt und nicht durch die Öffnung hindurchtreten kann.

Der Wäschetrockner kann weiterhin noch einen Masten aufweisen, an welchem das Spreizgestell befestigt ist, sowie ggfs. eine Vorrichtung zum Einziehen der Wäscheleine, derart, dass die Wäscheleine beim Schließen des Spreizgestells z.B. in hohl ausgeführte Arme eingezogen werden kann.

Es kann entweder nur eine Wäscheleine oder es können mehrere Wäscheleinen vorgesehen sein. Sind mehrere Wäscheleinen vorgesehen, dann kann jedem Segment, also jedem Bereich zwischen zwei Armen, oder jeder Ebene eine Wäscheleine zugeordnet sein. Für jede Wäscheleine ist dann eine Vorrichtung zum Verhaken vorgesehen.

In einer Ausführung der Erfindung wird die Vorrichtung zum Verhaken durch eine Schlinge der Wäscheleine und zwei Klammern gebildet, wobei die zweite Klammerdas Ende der Wäscheleine umschließt und die erste Klammer einen doppelten Strang der Wäscheleine umschließt und die Schlinge fixiert. Die erste Klammer ist dazu zwischen der Schlinge und dem Ende der Wäscheleine mit der zweiten Klammer positioniert und von einem Knick der Wäscheleine im Scheitel der Schlinge beabstandet. Die Länge der zweiten Klammer ist in vorteilhafter Weise größer als die größte Weite der Öffnung in dem Arm. Dadurch wird sichergestellt, dass die Vorrichtung zum Verhaken gut in die Öffnung eingeführt werden kann und sicher verhakt.

In Weiterbildung des Wäschetrockners ist die kleinste Weite der Öffnung in dem Arm größer als der Querschnitt der 2. ersten Klammer in ihrem montierten Zustand auf der Wäscheleine.

In vorteilhafter und daher bevorzugter Weiterbildung des Wäschetrockners sind die erste Klammer und die zweite Klammer vor ihrer Montage identisch in Form und Material. Dadurch können Material- und Werkzeugkosten geringgehalten werden. Nach ihrer Befestigung an der Wäscheleine ergeben sich ggfs.

unterschiedliche Ausformungen, da die zweite Klammer nur einen Strang, die erste Klammer hingegen zwei Stränge der Wäscheleine umschließt.

Gelöst wird die Aufgabe auch durch einen alternativen Wäschetrockner wie er nachfolgend beschrieben und beansprucht ist.

Erfindungsgemäß wurde dabei als vorteilhaft erkannt nur eine spezielle Klammer als Vorrichtung zum Verhaken zu verwenden.

Der erfindungsgemäße Wäschetrockner ist ähnlich wie die zuvor beschriebene Variante aufgebaut und unterscheidet sich nur in der Ausgestaltung der Vorrichtung zum Verhaken:
Der Wäschetrockner besitzt ein Spreizgestell mit einer Mehrzahl von aufspreizbaren Armen zur Aufnahme einer Wäscheleine, mindestens eine Wäscheleine, deren Ende an einem Arm verhakt ist, wobei der Arm mindestens eine Öffnung besitzt, durch welche die Wäscheleine geführt ist. Die Wäscheleine ist im Bereich ihres Endabschnittes mit einer Vorrichtung zum Verhaken versehen, derart, dass das Ende der Wäscheleine in dem Arm verhakt bleibt und nicht durch die Öffnung hindurchtreten kann.

Die Vorrichtung zum Verhaken wird durch eine Klammer gebildet, die einteilig aus einem Manschettensegment und mindestens einem Flügelsegment ausgebildet ist, wobei das Manschettensegment das Ende der Wäscheleine umschließt und wobei das Flügelelement sich in Verlängerung der Mantelfläche des Manschettensegmentes vom Ende der Wäscheleine weg erstreckt und den Querschnitt der Wäscheleine nicht komplett einfasst. Das Manschettensegment dient dazu, die Klammer fest mit dem Ende der Wäscheleine zu verbinden. Das mindestens eine Flügelsegment dient dazu einen größeren Widerhaken auszubilden, welcher das Verhaken der Wäscheleine im Arm bewirkt.

Die Länge der Klammer, d.h. von Manschettensegment und Flügelelement zusammen, ist größer als die größte Weite der Öffnung in dem Arm.

Dadurch wird sichergestellt, dass die Vorrichtung zum Verhaken gut in die Öffnung eingeführt werden kann und sicher verhakt.

In Weiterbildung des Wäschetrockners ist die kleinste Weite der Öffnung in dem Arm größer als der Querschnitt der Klammer.

In einer möglichen Ausgestaltung der Klammer ist das Flügelsegment rinnenförmig ausgeformt, und im Unterschied zum Manschettensegment nach einer Seite hin offen, und ein kleiner Teilabschnitt der Wäscheleine ist in dem Flügelsegment aufnehmbar.

So wird sichergestellt, dass die Wäscheleine angrenzend an das Manschettensegment in eine durch die offene Seite des Flügelsegments vorgegebene Richtung gut umknicken kann und durch das Manschettensegment und das Flügelsegment zusammen ein stabiler Widerhaken ausgebildet ist.

Für beide Varianten der vorstehend beschriebenen Wäschetrockner sind folgende forteilhafte Ausgestaltungen möglich:
Die Klammern können aus einem bandförmigen Material gebildet sein, z.B. aus Blech.

Die Klammern können aus Metall sein, insbesondere aus verzinktem Messing. Diese Materialwahl vereinigt die Vorteile hoher Stabilität und guter Formbarkeit mit Rostfreiheit.

In Weiterbildung des Wäschetrockners kann die Wäscheleine als verdrilltes oder geflochtenes Seil ausgeführt sein, insbesondere aus Polyester. Verdrillte oder geflochtene Seile sind in vorteilhafter Weise besonders flexibel und gut verformbar.

Die Erfindung betrifft auch ein Verfahren zum Verhaken einer Wäscheleine an einem Arm eines wie obenstehend beschriebenen Wäschetrockners mit folgenden Schritten:
a) Anbringen der zweiten Klammer am Ende der Wäscheleine
b) Umknicken des Endabschnittes der Wäscheleine zur Ausbildung einer Schlinge
c) Anbringen der ersten Klammer zum Fixieren der Schlinge, wobei die erste Klammer vom Knick der Wäscheleine im Scheitel der Schlinge beabstandet ist und den Strang der Wäscheleine vor dem Knick und den Strang der Wäscheleine nach dem Knick umschließt
d) Durchschieben des Endabschnittes der Wäscheleine durch die Öffnung im Arm. So kommt es zum Verhaken der Wäscheleine mit dem Arm.

Die Erfindung betrifft auch ein Verfahren zum Verhaken einer Wäscheleine an einem Arm eines wie zuvor beschriebenen Wäschetrockners mit folgenden Schritten:
a) Anbringen der Klammer am Ende der Wäscheleine
d) Durchschieben des Endabschnittes der Wäscheleine durch die Öffnung im Arm. So kommt es zum Verhaken der Wäscheleine mit dem Arm.

Bei beiden Verfahren zum Verhaken einer Wäscheleine kann das Anbringen der Klammern durch Vercrimpen erfolgen, was eine einfache, schnelle und gleichzeitig sichere Verbindungsart darstellt, bei welcher die Klammern mechanisch verformt und die Wäscheleine in die Klammern eingeklemmt wird.

Die beschriebene Erfindung und die beschriebenen vorteilhaften Weiterbildungen der Erfindung stellen auch in Kombination miteinander - soweit dies technisch sinnvoll ist - vorteilhafte Weiterbildungen der Erfindung dar.

Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

### Ausführungsbeispiel

Die Erfindung soll anhand beigefügter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet.

Es zeigen in schematischer Darstellung
- Fig. 1: eine erste Ausführungsform einer Vorrichtung zum Verhaken
- Fig. 2a-d: den Vorgang des Verhakens einer Wäscheleine mit einer wie in Fig.1 dargestellten Vorrichtung zum Verhaken
- Fig. 3: eine zweite Ausführungsform einer Vorrichtung zum Verhaken
- Fig. 4a-c: den Vorgang des Verhakens einer Wäscheleine mit einer wie in Fig.3 dargestellten Vorrichtung zum Verhaken
- Fig. 5: einen Wäschetrockner in einer Übersichtsdarstellung

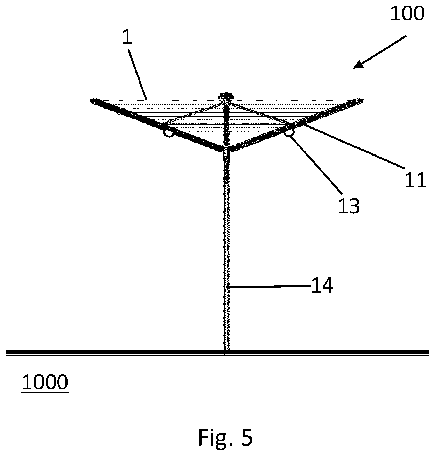

Fig. 5 zeigt einen Wäschetrockner 100 in einer Übersichtsdarstellung. Der Wäschetrockner 100 in Form einer Wäschespinne steht auf dem Boden 1000 und kann geöffnet und geschlossen, also auf und zu gefaltet werden. In Fig. 5 ist der Wäschetrockner in geöffnetem Zustand dargestellt, in welchem eine Wäscheleine 1 aufgespannt ist. Die Wäscheleine 1 wird dabei von einer Mehrzahl von Armen 11 gehalten, welche an einem Mast 14 schwenkbar befestigt sind. In möglicher Ausgestaltung kann eine Vorrichtung 13 zum Einziehen der Wäscheleine 1 vorhanden sein, welche bewirkt, dass die Wäscheleine 1 beim Schließen der Wäschespinne nicht undefiniert herumhängt sondern in hohl ausgebildete Arme 11 eingezogen wird.

Um die Wäscheleine 1 an den Armen 11 zu befestigen sind Vorrichtungen zum Verhaken 4 vorgesehen, welche nachfolgend näher beschrieben werden:

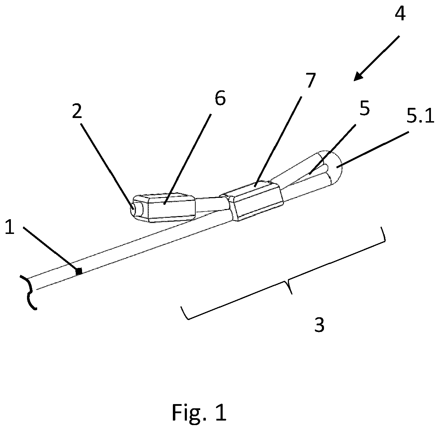

Fig. 1 zeigt eine erste Ausführungsform einer Vorrichtung zum Verhaken 4. Die Vorrichtung zum Verhaken 4 wird durch eine Schlinge 5 der Wäscheleine 1 und zwei Klammern 6, 7 gebildet, wobei die zweite Klammer 6 das Ende der Wäscheleine 1 umschließt und die erste Klammer 7 im Bereich des Endabschnittes 3 der Wäscheleine 1 einen doppelten Strang der Wäscheleine 1 umschließt und die Schlinge 5 fixiert. Die erste Klammer 7 ist dabei zwischen der Schlinge 5 und der zweiten Klammer 6 angeordnet, beabstandet zum Knick 5.1 im Scheitel der Schlinge 5. Zwischen erster Klammer 7 und zweiter Klammer 6 kann die Wäscheleine 1 umgebogen bzw. geknickt werden.

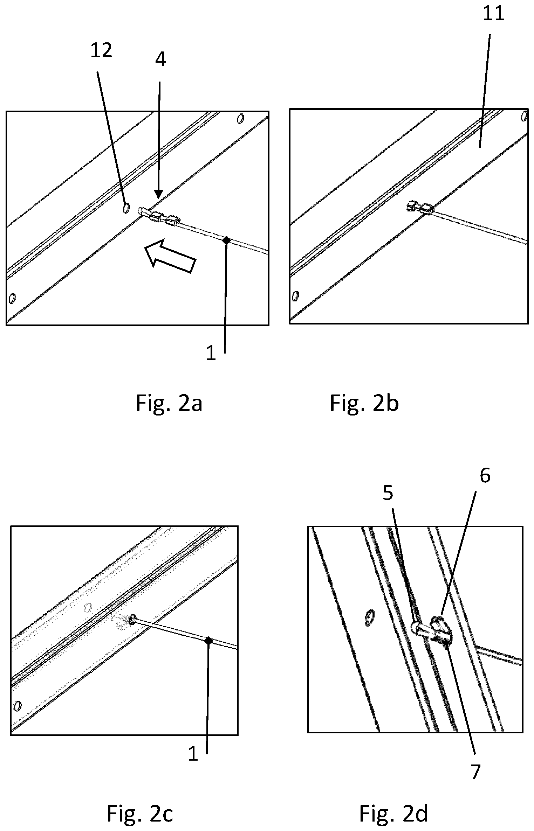

Fig. 2a-d zeigen den Vorgang des Verhakens einer Wäscheleine 1 mit einer wie in Fig.1 dargestellten Vorrichtung zum Verhaken 4.
   Nach einem Anbringen der zweiten Klammer 6 am Ende 2 der Wäscheleine 1 und einem Umknicken des Endabschnittes 3 der Wäscheleine 1 zur Ausbildung einer Schlinge 5 und einem Anbringen der ersten Klammer 7 zum Fixieren der Schlinge 5 kann der Endabschnitt 3 der Wäscheleine 1 mit dem Knick 5.1 der Schlinge 5 voraus durch die Öffnung 12 im Arm 11 hindurch geschoben werden (vgl. Fig. 2a). Die Dimensionierung von Klammern 6,7 und Öffnung 12 ist dabei so, dass beide Klammern 6,7 nacheinander durch die Öffnung 12 hindurch passen. Nach erfolgtem Einführen befindet sich die Vorrichtung zum Verhaken 4 auf der anderen Seite des Arms 11. Erfährt die Wäscheleine 1 nun einen Zug (vgl. Fig. 2c), so wird das Ende 2 der Wäscheleine 1 mit der Vorrichtung zum Verhaken gegen die Öffnung 12 gezogen. Dabei spreizt sich die zweite Klammer 6 weiter vom unter Zug stehenden Strang der Wäscheleine 1 weg und bildet einen Widerhaken. Die Dimensionierung von Klammern 6 und Öffnung 12 ist dabei so, dass die zweite Klammer 6 in aufgespreiztem Zustand nicht durch die Öffnung 12 passt (vgl. Fig. 2d).

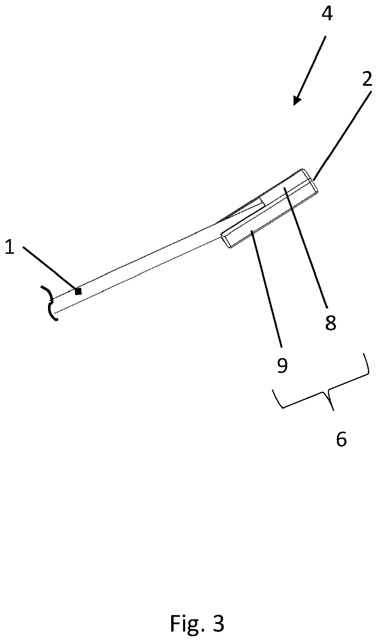

Fig. 3 zeigt eine zweite Ausführungsform einer Vorrichtung zum Verhaken 4. Die Vorrichtung zum Verhaken 4 wird dabei durch nur eine Klammer 6 gebildet, die eine spezielle Formgebung aufweist. Sie ist einteilig aus einem Manschettensegment 8 und mindestens einem Flügelsegment 9 ausgebildet, wobei das Manschettensegment 8 das Ende 2 der Wäscheleine 1 umschließt und das Flügelelement 9 sich in Verlängerung der Mantelfläche des Manschettensegmentes 8 vom Ende 2 der Wäscheleine weg entlang dem weiteren Verlauf der Wäscheleine 1 erstreckt. Das Flügelsegment 9 der Klammer 6 ist in der dargestellten Ausführungsform rinnenförmig ausgeformt, nimmt ein Teilstück der Wäscheleine 1 in sich auf, umfasst die Wäscheleine 1 also nicht komplett, sondern ist zu einer Seite hin offen.

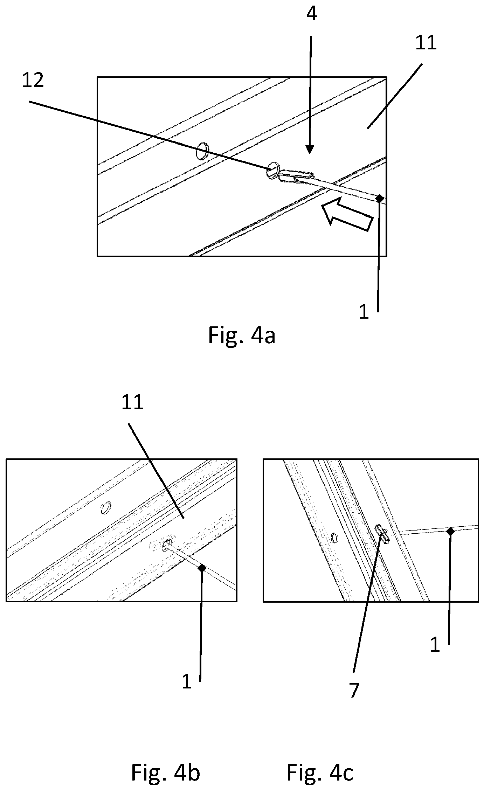

Fig. 4a-c zeigen den Vorgang des Verhakens einer Wäscheleine 1 mit einer wie in Fig. 3 dargestellten Vorrichtung zum Verhaken 4.
   Nach dem Anbringen der Klammer 6 am Ende 2 der Wäscheleine 1 erfolgt ein Durchschieben des Endabschnittes 3 der Wäscheleine 1 mit dem vom Manschettensegment 8 umfassten Ende der Wäscheleine 1 voraus durch die Öffnung 12 im Arm 11 (vgl. Fig. 4a). Die Dimensionierung von Klammern 6 und Öffnung 12 ist dabei so, dass die Klammer 6 durch die Öffnung 12 hindurch passt.

Nach erfolgtem Einführen befindet sich die Vorrichtung zum Verhaken 4 auf der anderen Seite des Arms 11. Erfährt die Wäscheleine 1 nun einen Zug (vgl. Fig. 4b), so wird das Ende 2 der Wäscheleine 1 mit der Vorrichtung zum Verhaken gegen die Öffnung 12 gezogen. Dabei knickt die Klammer 6 relativ zu dem unter Zug stehenden Strang der Wäscheleine 1 weg und bildet einen T-förmigen Widerhaken. Die Dimensionierung der Länge der Klammer 6 und der Öffnung 12 ist dabei so, dass die Klammer 6 nicht durch die Öffnung 12 passt (vgl. Fig.4c).

Das Anbringen der Klammern 6, 7 kann in beiden Verfahren zum Verhaken einer Wäscheleine durch Vercrimpen erfolgen.

### Bezugszeichenliste

- 1: Wäscheleine
- 2: Ende der Wäscheleine
- 3: Bereich des Endabschnittes
- 4: Vorrichtung zum Verhaken
- 5: Schlinge
- 5.1: Knick
- 6: zweite Klammer
- 7: erste Klammer
- 8: Manschettensegment
- 9: Flügelsegment
- 10: Spreizgestell
- 11: Arm
- 12: Öffnung
- 13: Vorrichtung zum Einziehen
- 14: Mast
- 100: Wäschetrockner
- 1000: Boden

## Patentansprüche

1. Wäschetrockner (100) mit einem Spreizgestell (10) mit einer Mehrzahl von aufspreizbaren Armen (11) zur Aufnahme einer Wäscheleine (1), mit mindestens einer Wäscheleine (1), deren Ende (2) an einem Arm (11) verhakt ist, wobei der Arm (11) eine Öffnung (12) besitzt, durch welche die Wäscheleine (1) geführt ist, und wobei die Wäscheleine (1) im Bereich ihres Endabschnittes (3) mit einer Vorrichtung zum Verhaken (4) versehen ist, wobei die Vorrichtung zum Verhaken (4) eine Schlinge (5) der Wäscheleine (1) und eine erste Klammer (7) umfasst, wobei die erste Klammer (7) einen doppelten Strang der Wäscheleine (1) umschließt und die Schlinge fixiert (5),
**dadurch gekennzeichnet, dass**
die Vorrichtung zum Verhaken (4) durch die Schlinge (5) der Wäscheleine (1) und die erste Klammer (7) und eine zweite Klammer (6) gebildet wird, wobei die zweite Klammer (6) das Ende der Wäscheleine (1) umschließt und
die Länge der zweiten Klammer (6) größer ist als die größte Weite der Öffnung (12).

2. Wäschetrockner nach Anspruch 1 **dadurch gekennzeichnet, dass**
die kleinste Weite der Öffnung (12) größer ist als der Querschnitt der ersten und zweiten Klammer (6, 7).

3. Wäschetrockner (100) mit einem Spreizgestell (10) mit einer Mehrzahl von aufspreizbaren Armen (11) zur Aufnahme einer Wäscheleine (1),
mit einer Wäscheleine (1), deren Ende (2) an einem Arm (11) verhakt ist, wobei der Arm (11) eine Öffnung besitzt, durch welche die Wäscheleine (1) geführt ist, und wobei die Wäscheleine (1) im Bereich ihres Endabschnittes (3) mit einer Vorrichtung zum Verhaken (4) versehen ist die Vorrichtung zum Verhaken (4) durch eine Klammer (6) gebildet wird,
**dadurch gekennzeichnet, dass**
die Klammer (6) einteilig aus einem Manschettensegment (8) und mindestens einem Flügelsegment (9) ausgebildet ist, wobei das Manschettensegment (8) das Ende (2) der Wäscheleine (1) umschließt und wobei das Flügelelement (9) sich in Verlängerung der Mantelfläche des Manschettensegmentes (8) vom Ende (2) der Wäscheleine (1) weg erstreckt und dass
die Länge der Klammer (6) größer ist als die größte Weite der Öffnung (12).

4. Wäschetrockner nach Anspruch 3 **dadurch gekennzeichnet, dass**
die kleinste Weite der Öffnung (12) größer ist als der Querschnitt der Klammer (6).

5. Wäschetrockner nach einem der Ansprüche 3 bis 4 **dadurch gekennzeichnet, dass**
das Flügelsegment (9) der Klammer (6) rinnenförmig ausgeformt und die Wäscheleine (1) in dem Flügelsegment (9) aufnehmbar ist.

6. Wäschetrockner nach einem der vorangehenden Ansprüche **dadurch gekennzeichnet, dass**
die Klammern (6, 7) aus Metall sind, insbesondere aus verzinktem Messing.

7. Wäschetrockner nach einem der vorangehenden Ansprüche **dadurch gekennzeichnet, dass**
die Wäscheleine (1) als verdrilltes oder geflochtenes Seil ausgeführt ist, insbesondere aus Polyester.

8. Verfahren zum Verhaken einer Wäscheleine (1) an einem Arm (11) eines Wäschetrockners (100) nach einem der Ansprüche 1-2 mit folgenden Schritten:
a) Anbringen der zweiten Klammer (6) am Ende der Wäscheleine (1)
b) Umknicken des Endabschnittes der Wäscheleine (1) zur Ausbildung einer Schlinge (5)
c) Anbringen der ersten Klammer (7) zum Fixieren der Schlinge (5),
wobei die erste Klammer (7) vom Knick (5.1) der Wäscheleine (1) beabstandet ist und den Strang der Wäscheleine (1) vor dem Knick (5.1) und den Strang der Wäscheleine (1) nach dem Knick (5.1) umschließt
d) Durchschieben des Endabschnittes (3) der Wäscheleine (1) durch die Öffnung (12) im Arm (11).

9. Verfahren zum Verhaken einer Wäscheleine (1) an einem Arm (11) eines Wäschetrockners (100) nach einem der Ansprüche 3-5, oder einem der Ansprüche 6-7 sofern abhängig vom Anspruch 3, mit folgenden Schritten:
a) Anbringen der Klammer (6) am Ende (2) der Wäscheleine (1)
d) Durchschieben des Endabschnittes (3) der Wäscheleine (1) durch die Öffnung (12) im Arm (11).

10. Verfahren zum Verhaken einer Wäscheleine nach Anspruch 8 oder 9, wobei das Anbringen der Klammern (6, 7) durch Vercrimpen erfolgt.

## Claims

1. Laundry airer (100) having an open-out frame (10) with a plurality of open-out arms (11) for accommodating a clothes lines (1), and having at least one clothes line (1), of which the end (2) is arrested on an arm (11), wherein the arm (11) has an opening (12) through which the clothes line (1) is guided, and wherein the region of the end portion (3) of the clothes line (1) is provided with an arresting device (4), wherein the arresting device (4) comprises a loop (5) of the clothes line (1) and a first clip (7), wherein the first clip (7) encloses a double strand of the clothes line (1) and fixes the loop (5),
**characterized in that**
the arresting device (4) is formed by the loop (5) of the clothes line (1) and by the first clip (7) and a second clip (6), wherein the second clip (6) encloses the end of the clothes line (1) and the length of the second clip (6) is greater than the greatest extent of the opening (12) .

2. Laundry airer according to Claim 1, **characterized in that**
the smallest extent of the opening (12) is greater than the cross section of the first and second clips (6, 7).

3. Laundry airer (100) having an open-out frame (10) with a plurality of open-out arms (11) for accommodating a clothes lines (1), and having a clothes line (1), of which the end (2) is arrested on an arm (11), wherein the arm (11) has an opening through which the clothes line (1) is guided, and wherein the region of the end portion (3) of the clothes line (1) is provided with an arresting device (4), the arresting device (4) being formed by a clip (6),
**characterized in that**
the clip (6) is formed in one piece from a sleeve segment (8) and at least one wing segment (9), wherein the sleeve segment (8) encloses the end (2) of the clothes line (1), and wherein the wing element (9) extends away from the end (2) of the clothes line (1), in continuation of the lateral surface of the sleeve segment (8), and **in that** the length of the clip (6) is greater than the greatest extent of the opening (12).

4. Laundry airer according to Claim 3, **characterized in that**
the smallest extent of the opening (12) is greater than the cross section of the clip (6).

5. Laundry airer according to either of Claims 3 and 4, **characterized in that**
the wing segment (9) of the clip (6) is in channel form and the clothes line (1) can be accommodated in the wing segment (9).

6. Laundry airer according to one of the preceding claims, **characterized in that**
the clips (6, 7) are made of metal, in particular of galvanized brass.

7. Laundry airer according to one of the preceding claims, **characterized in that**
the clothes line (1) is designed in the form of a twisted or braided cord, in particular made of polyester.

8. Method for arresting a clothes line (1) on an arm (11) of a laundry airer (100) according to either of Claims 1-2, having the following steps:
a) fitting the second clip (6) at the end of the clothes line (1)
b) bending the end portion of the clothes line (1) over to form a loop (5)
c) fitting the first clip (7) for the purpose of fixing the loop (5), wherein the first clip (7) is spaced apart from the bend (5.1) of the clothes line (1) and encloses the strand of the clothes line (1) in front of the bend (5.1) and the strand of the clothes line (1) after the bend (5.1)
d) pushing the end portion (3) of the clothes line (1) through the opening (12) in the arm (11).

9. Method for arresting a clothes line (1) on an arm (11) of a laundry airer (100) according to one of Claims 3-5, or - if dependent on Claim 3 - either of Claims 6-7, having the following steps:
a) fitting the clip (6) at the end (2) of the clothes line (1)
d) pushing the end portion (3) of the clothes line (1) through the opening (12) in the arm (11).

10. Method for arresting a clothes line according to Claim 8 or 9, wherein the clips (6, 7) are fitted by crimping.

## Revendications

1. Séchoir à linge (100) avec un châssis extensible (10) avec une pluralité de bras (11) pouvant être écartés pour recevoir une corde à linge (1), avec au moins une corde à linge (1) dont l'extrémité (2) est accrochée à un bras (11), le bras (11) possédant une ouverture (12) à travers laquelle la corde à linge (1) est guidée, et la corde à linge (1) étant munie d'un dispositif d'accrochage (4) dans la zone de sa section d'extrémité (3), le dispositif d'accrochage (4) comprenant une boucle (5) de la corde à linge (1) et une première pince (7), la première pince (7) entourant un double brin de la corde à linge (1) et fixant la boucle (5),
**caractérisé en ce que**
le dispositif d'accrochage (4) est formé par la boucle (5) de la corde à linge (1) et la première pince (7) et une deuxième pince (6), la deuxième pince (6) entourant l'extrémité de la corde à linge (1) et la longueur de la deuxième pince (6) étant supérieure à la plus grande largeur de l'ouverture (12).

2. Séchoir à linge selon la revendication 1, **caractérisé en ce que** la plus petite largeur de l'ouverture (12) est supérieure à la section transversale de la première et de la deuxième pince (6, 7).

3. Séchoir à linge (100) avec un châssis extensible (10) avec une pluralité de bras (11) pouvant être écartés pour recevoir une corde à linge (1), avec une corde à linge (1) dont l'extrémité (2) est accrochée à un bras (11), le bras (11) possédant une ouverture, à travers laquelle la corde à linge (1) est guidée, et la corde à linge (1) étant pourvue d'un dispositif d'accrochage (4) dans la zone de sa section d'extrémité (3), le dispositif d'accrochage (4) étant formé par une pince (6),
**caractérisé en ce que**
la pince (6) est réalisée en une seule pièce à partir d'un segment de manchette (8) et d'au moins un segment d'aile (9), le segment de manchette (8) entourant l'extrémité (2) de la corde à linge (1) et l'élément d'aile (9) s'étendant dans le prolongement de la surface d'enveloppe du segment de manchette (8) en s'éloignant de l'extrémité (2) de la corde à linge (1) et **en ce que** la longueur de la pince (6) est supérieure à la plus grande largeur de l'ouverture (12).

4. Séchoir à linge selon la revendication 3, **caractérisé en ce que** la plus petite largeur de l'ouverture (12) est supérieure à la section transversale de la pince (6).

5. Séchoir à linge selon l'une quelconque des revendications 3 à 4, **caractérisé en ce que** le segment d'aile (9) de la pince (6) est en forme de gouttière et la corde à linge (1) peut être reçue dans le segment d'aile (9).

6. Séchoir à linge selon l'une quelconque des revendications précédentes, **caractérisé en ce que** les pinces (6, 7) sont en métal, notamment en laiton galvanisé.

7. Séchoir à linge selon l'une quelconque des revendications précédentes, **caractérisé en ce que** la corde à linge (1) est conçue sous forme de câble torsadé ou tressé, notamment en polyester.

8. Procédé d'accrochage d'une corde à linge (1) sur un bras (11) d'un séchoir à linge (100) selon l'une quelconque des revendications 1 à 2, avec les étapes suivantes :
a) la mise en place de la deuxième pince (6) à l'extrémité de la corde à linge (1),
b) le pliage de la section d'extrémité de la corde à linge (1) pour former une boucle (5),
c) la mise en place de la première pince (7) pour fixer la boucle (5), la première pince (7) étant espacée du pli (5.1) de la corde à linge (1) et entourant le brin de la corde à linge (1) avant le pli (5.1) et le brin de la corde à linge (1) après le pli (5.1),
d) le passage de la section d'extrémité (3) de la corde à linge (1) à travers l'ouverture (12) dans le bras (11).

9. Procédé d'accrochage d'une corde à linge (1) sur un bras (11) d'un séchoir à linge (100) selon l'une quelconque des revendications 3 à 5, ou selon l'une quelconque des revendications 6 à 7 dans la mesure où elle dépend de la revendication 3, avec les étapes suivantes :
a) la mise en place de la pince (6) à l'extrémité (2) de la corde à linge (1),
d) le passage de la section d'extrémité (3) de la corde à linge (1) à travers l'ouverture (12) dans le bras (11).

10. Procédé d'accrochage d'une corde à linge selon la revendication 8 ou 9, dans lequel la mise en place des pinces (6, 7) a lieu par sertissage.
